# EUROPEAN PATENT SPECIFICATION

(11) **EP 1 062 832 B1**
(45) Date of publication and mention of the grant of the patent: **24.07.2002**
(21) Application number: 99911764.1
(22) Date of filing: 10.03.1999
(51) Int. Cl.: H04Q 11/00, H04J 14/02

(54) **METHOD FOR CONFIGURING AND RECONFIGURING NETWORKS**
VERFAHREN ZUM KONFIGURIEREN UND REKONFIGURIEREN VON NETZEN
PROCEDE DE CONFIGURATION ET DE RECONFIGURATION DE RESEAUX

(30) Priority: 10.03.1998 DE 19810348
(43) Date of publication of application: 27.12.2000
(73) Proprietor: Telefonaktiebolaget L M Ericsson (Publ), 126 25 Stockholm (SE)
(72) Inventor: CINKLER, Tibor, H-1121 Budapest (HU)
(74) Representative: HOFFMANN - EITLE
(86) International application number: EP9901547
(87) International publication number: WO9946951

(56) References cited:
- CHEN C ET AL: "A NEW MODEL FOR OPTIMAL ROUTING IN ALL-OPTICAL NETWORKS WITH SCALABLE NUMBER OF WAVELENGTH CONVERTERS" GLOBECOM '95. IEEE GLOBAL TELECOMMUNICATIONS CONFERENCE, SINGAPORE, NOV. 14 - 16, 1995, vol. 2, 14 November 1995 (1995-11-14), pages 993-997, XP000622942 INSTITUTE OF ELECTRICAL AND ELECTRONICS ENGINEERSISBN: 0-7803-2510-9
- KUO-CHUN LEE ET AL: "ROUTING AND SWITCHING IN A WAVELENGTH CONVERTIBLE OPTICAL NETWORK" NETWORKING: FOUNDATION FOR THE FUTURE, SAN FRANCISCO, MAR. 28 - APR. 1, 1993, vol. 2, no. CONF. 12, 28 March 1993 (1993-03-28), pages 578-585, XP000399037 INSTITUTE OF ELECTRICAL AND ELECTRONICS ENGINEERSISBN: 0-8186-3580-0
- CHLAMTAC I ET AL: "EFFICIENT ROUTING OF LIGHTPATHS" MILCOM 1996 CONFERENCE PROCEEDINGS, MCLEAN, VA., OCT. 21 - 24, 1996, vol. 1, no. CONF. 15, 22 October 1996 (1996-10-22), pages 108-111, XP000697256 INSTITUTE OF ELECTRICAL AND ELECTRONICS ENGINEERSISBN: 0-7803-3683-6

## Description

### [Background of the invention]

The present invention relates to a method for configuring or reconfiguring a communications network comprising nodes and links, where at least some of said links are such that they comprise more than one independent sublink between two nodes.

An independent sublink in this sense means that each sublink between two nodes can carry a signal independently of signals carried along other sublinks between said two nodes. An example of such a communications network is an optical WDM network (WDM = Wavelength Division Multiplexing), in which the links carry optical signals between the nodes, and in which a plurality of wavelengths defines a plurality of sublinks, i.e. each wavelength can be used to independently carry a signal. In this case the sublinks are logical links. Another example is an optical SDM network (SDM = Space Division Multiplexing), in which a plurality of fibers contained in a cable constitutes a link and each fiber can independently carry a signal. In this case the sublinks are physical links.

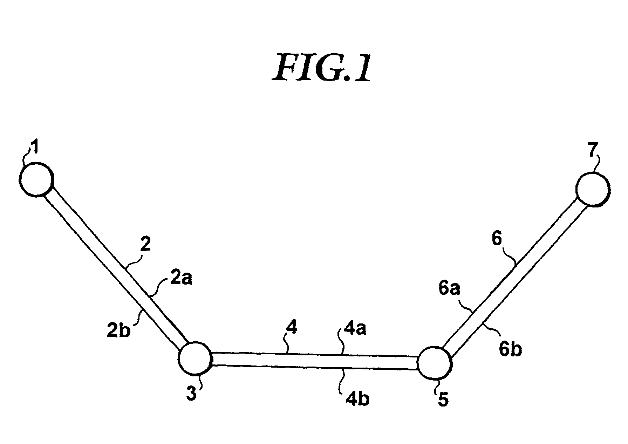

Fig. 1 shows a simplified example of such a network. Nodes 1, 3, 5 and 7 are connected by links 2, 4 and 6. This arrangement 1 - 7 constitutes a topology on the physical level.

In the above example, each link comprises two sublinks, respectively denoted by a and b. Each node can be set to execute at least two functions, namely terminating a sublink or transmitting a sublink. Termination means that a node is set such that the sublink ends at that node in the sense that the corresponding signal is extracted from the network, whereas transmission means that the node is set such that a sublink is not terminated. In other words, transmission means that an incoming signal is necessarily output by the node, whereas termination means that the signal can be removed from the network. It is possible that a signal from a terminated sublink is reentered into the network, but that does not change the status of said sublink as terminated, because the signal is not necessarily again output from the node, as this would be if the sublink were set for transmission. Much rather, the processing of the signal from the terminated sublink, which consists in either permanently removing the signal from the network and e.g. routing it to the signal's destination in the vicinity of the node, or in reintroducing the signal into the network at the node, is in the domain of momentary traffic control, whereas the setting of a node for transmission or termination is in the domain of the configuration, which is not influenced by the momentary traffic control, as will be explained further on.

As an example, in a WDM network termination means that the optical signal is removed at that node and converted into an electrical signal and demultiplexed for further processing. On the other hand, transmission means that an optical signal coming into a node on a specific wavelength is necessarily output from said node as an optical signal, be it of the same wavelength or of another (the possibility of wavelength shifting is not relevant to the problem underlying the invention and will therefore not be explained here, but will be explained in connection with specific embodiments of the invention). Naturally, a signal on a terminated wavelength that has been converted and demultiplexed into an electrical signal can be multiplexed again and converted into an optical signal, to then be reintroduced into the optical WDM network at the same node. However, termination and transmission are clearly distinct, as transmission of a wavelength means that the data on an optical signal of a given wavelength coming into said node are necessarily output as an optical signal (regardless of how the signal is transferred from the incoming sublink to the outgoing sublink, i.e. by Optical Add-and-Drop Multiplexers, Optical Cross Connection or Electrical Cross Connection) from said node, i.e. not terminated, whereas termination means that the incoming signal is converted and demultiplexed, after which the signal can be reintroduced, but does not have to be.

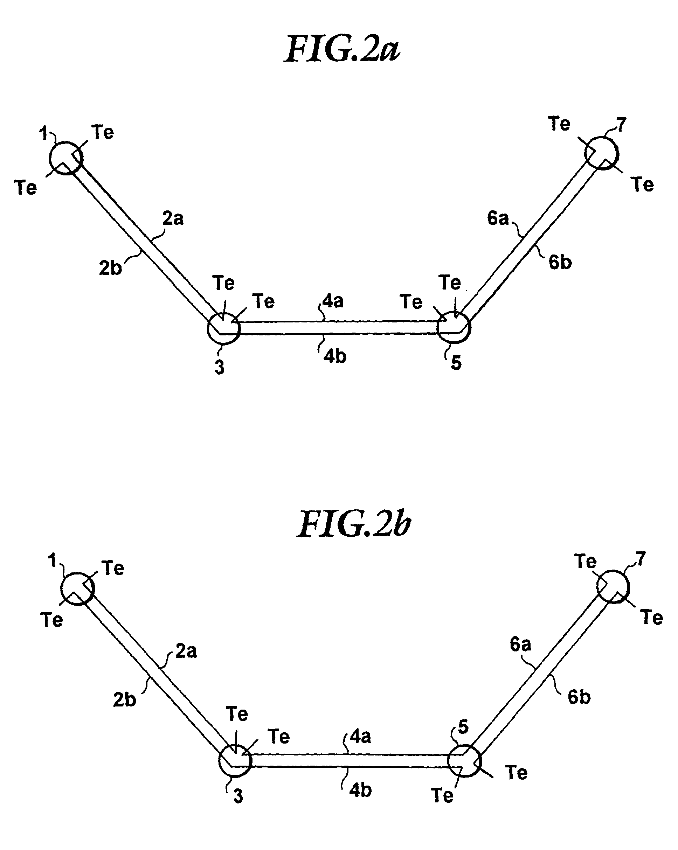

This is explained in connection with Fig. 2a and 2b. Fig. 2a shows the same example as Fig.1, but indicates a specific configuration of the general topology shown in Fig. 1. As can be seen in Fig. 2a, sublink 2a is terminated (Te) at node 3, whereas sublink 2b is transmitted to sublink 4b. In the example of Fig. 2a, sublink 4b is in turn transmitted through node 5 to sublink 6b, so that sublinks 2b, 4b and 6b establish a path between nodes 1 and 7. On the other hand, sublinks 4a and 6a are terminated at the node pairs 3,5 and 5, 7 respectively. Such an arrangement of nodes being set to transmit or terminate defines a logical topology above the physical level. This logical arrangement is referred to as a configuration of the network.

In a real network, the configuring is done before starting to employ the network for communication, and the configuration will remain as it is during the operation of the network. In other words, the momentary routing of traffic through the network is accomplished without changing the configuration, i.e. at fixed configuration.

However, if the demands on the network drastically change (e.g. the average traffic between two nodes changes considerably) or the situation in the network changes (e.g. a specific node fails), then generally a change in the configuration is necessary, which is referred to as reconfiguration.

According to the configuration shown in Fig. 2a, a communication e.g. between node 1 and node 7 can take place over path (2b-4b-6b), or over paths (2a), (4a) and (6a). It is clear that a communication over paths (2a), (4a) and (6a) implies that the respectively terminated signals are reintroduced into the network. A communication between nodes 1 and 5 can take place over paths (2a) and (4a), or over the paths (2b-4b-6b) and (6a). Please note that in the present example the sublinks 2a - 6b are assumed as being bidirectional.

As can be seen, the term path refers to one or more connected sublinks that are terminated at each end.

The physical network of Fig. 1 is not restricted to the configuration shown in Fig. 2a. Much rather, other configurations are possible, such as the one shown in Fig. 2b. Here, sublinks 2b and 4b form a path (2b-4b) between nodes 1 and 5, sublinks 4a and 6a form a path (4a-6a) between nodes 3 and 7, sublink 2a establishes a path (2a) between nodes 1 and 3, and sublink 6b establishes a path (6b) between nodes 5 and 7. Due to this specific configuration, a direct communication between nodes 3 and 5 is not possible, much rather paths (2a) and (2b-4b) or (4a-6a) and (6b) must be chosen. Another possible configuration, which is not shown, would be having each sublink terminated at each node to which is connected, i.e. forming paths only between neighboring nodes.

It is readily apparent that the number of possible configurations depends on the number of nodes, links and sublinks per link. With increasing numbers of nodes, links and sublinks, the number of configurations becomes extremely large. On the other hand, once a specific physical network is given, it is necessary to determine a configuration that fulfills the requirements set for communication, while at the same time fulfilling one or more criteria, such as high communication speed, low loss, low equipment cost, etc. These criteria can be mutually exclusive, competing or mutually beneficial. The same challenge arises in reconfiguration.

As can be seen in the comparison of Figures 2a and 2b, the configuration of Fig. 2a is advantageous if there is a strong traffic demand between nodes 1 and 7 and it is desired that the traffic be held on the network level, i.e. there be little signal processing in the nodes, whereas the configuration of Fig. 2b is advantageous if there is a strong traffic demand between nodes 1 and 5 and 3 and 7. However, the example of Fig. 2 is simplified and real networks are far more complicated. Due to the prohibitively large number of possible configurations in real networks, a simple testing of all possible configurations for compatibility with the requirements and supplementary criteria is not possible.

Also, the above example is simplified in the sense that it only shows a basic type of transmission. In this basic transmission, a sublink of type "a" is either terminated or transmitted to another sublink of type "a". The possibility of transmitting a sublink of type "a" to a sublink of type "b" is not contemplated. However, there exist nodes, in which a transmission from one type of sublink to another type, i.e. from one sublink having a specific characterizing property to another sublink having a different characterizing property.

A practical example of nodes that typically only transmit a sublink having a specific characterizing property to another sublink of the same property, are OADM nodes (OADM = Optical Add-and-Drop Multiplexers) in a WDM network. In keeping with the above mentioned examples of Figures 1 and 2, the different sublinks along one link would be different wavelengths, e.g. 2a, 4a and 6a a wavelength WL1 and 2b, 4b and 6b a wavelength WL2. In other words, in this example the wavelength is the characterizing property. The configuration of node 3 Fig. 2a would then mean that wavelength WL 1 is terminated at said node, whereas wavelength WL2 passes through, i.e. is transmitted. In other words, in a WDM network using OADM nodes, a signal coming in at a given wavelength is either terminated, i.e. subjected to processing such as conversion from optical to electrical, or passed through and sent out again at the same wavelength. It may be noted that the transmission is achieved by an optical switch.

However, there also exist nodes that additionally allow a change in the characterizing property and/or the transmitting of one sublink onto a plurality of other sublinks. An example in a WDM network are OXC nodes (OXC = Optical Cross-Connect). In keeping with the example of Fig. 1, and assuming that the individual sublinks are individual wavelengths, then an OXC node could not only be set to terminate or transmit an incoming wavelength to the same wavelength, but also change from one incoming wavelength to a different outgoing wavelength and/or transmit to one of a plurality of sublinks of the same quality. In other words, if node 3 in Fig. 1 were an OXC node, sublink 2a (WL1) in Fig. 1 could not only be terminated or passed through to sublink 4a (WL1), it could also be transmitted to sublink 4b (WL2). Such property changing nodes become important when more than two lines are connected to a node, because then configuring means that an incoming sublink must be able to be transmitted to more than one outgoing sublink.

It is readily understandable that such an additional possibility makes the problem of configuration or reconfiguration in accordance with the requirements and criteria even more complicated.

### [Prior Art]

The standard approach to the design, configuration and optimizing of WDM networks is to decompose the problem into the following sub-problems, in given order:
- determine the virtual topology (the lightwave paths)
- assign a wavelength to each lightpath (also referred to as WA, i.e. wavelength assignment), and
- route the traffic over the lightpaths.

The advantage of this approach is that the complex overall problem is divided into subproblems having a smaller number of variables and hence lower complexity, because the complexity (which determines running time) of algorithms is proportional to a (e.g. polynomial or exponential) function of the number of variables. The disadvantage is that the subproblems are solved sequentially, which deteriorates the quality of the solution for the overall problem.

Such methods are e.g. disclosed in "A Heuristic Wavelength Assignment Algorithm for Multihop WDM Networks with Wavelength Routing and Wavelength Re-Use" by Z. Zhang and A.S. Acampora, in Transactions on IEEE Networking, vol. 3, no. 3, June 1995, pages 281 - 288, in "Routing and Wavelength Assignment in All-Optical Networks" by R. Ramaswami and K.N. Sivarajan, in IEEE Transactions on Networking, vol. 3, no. 5, October 1995, pages 489 - 500, or in Performance of All-Optical Networks with Limited-Range Wavelength Conversion" by H. Harai, M. Murata and H. Miyahara, in ICC'97 - IEEE International Conference on Communications, Montreal, June 1997. These documents relate to methods that deal with specific aspects of certain networks and use the above mentioned decomposition following specific criteria.

It is also known in the art to apply graph theory to solving problems dealing with networks. Examples are the above mentioned paper by Harai et al., a paper titled "Lightpath (Wavelength) Routing in Large WDM Networks" by I. Chlamtac, A. Farago and T. Zhang, in IEEE Journal of Selected Areas in Communications, vol. 14, no. 5, June 1996, pages 909 - 913, which presents an algorithm for lightpath routing by transforming the network into a special structure called a wavelength graph, and WO 97/05714, which describes a technique for optimal allocation of multiplexing equipment and distribution of load in a fiber optic network.

### [Object of the invention]

The object of the present invention is to provide a generalized method for configuring or reconfiguring a given network that does not divide the procedure into the above mentioned three steps but still has low complexity, and which is not restricted to being employed in conjunction with one type of network or to specific criteria for optimization.

### [Disclosure of the present invention]

This object is solved by a method for configuring or reconfiguring a network consisting of nodes and links, where at least some of said links comprise more than one independent sublink, said independent sublinks being capable of transmitting a signal independently of the other sublinks in said link, wherein said nodes connected to said links comprising more than one independent sublink are capable of at least being set such that each independent sublink is terminated at said node or transmitted to another independent sublink, said method comprising:
defining a graph in which edges represent sublinks, parallel edges represent links that comprise said sublinks and vertices and edges represent nodes, assigning initial weights to each edge at each vertex, respectively for transmission and termination, according to a first predetermined criterion, choosing a first pair of nodes according to a second predetermined criterion, determining a series of said independent sublinks forming a specific path between said first pair of nodes, wherein said specific path fulfills a third predetermined criterion with respect to the other possible paths between said first pair of nodes, said third criterion for determining a path being associated with the weights of the edges along a path, updating the weights assigned to the edges forming said specific path, for each edge of said path in each node along said path, wherein
   - the weight for transmission assigned to an edge that in said path is transmitted through said node is decreased with respect to the initial weight for transmission,
   - the weight for transmission assigned to an edge that in said path is terminated at said node is increased with respect to the initial weight for transmission,
   - the weight for termination assigned to an edge that in said path is transmitted through said node is increased with respect to the initial weight for termination, and
   - the weight for termination assigned to an edge that in said path is terminated at said node is decreased with respect to the initial weight for termination,
choosing another pair of nodes that is different from said first pair, in accordance with said first criterion, and repeating said process of determining a path, updating the weights and choosing a further pair of nodes until a fourth predetermined criterion is fulfilled.

The method of the invention, which in its core consists in determining pairs of nodes, determining a path that is optimal in accordance with a given criterion between said nodes and then updating the weights for the edges and repeating the process, when it is applied to optical networks, solves the above mentioned routing and wavelength assignment problems simultaneously while it nonetheless has a low complexity.

Also, a characteristic of the method of the present invention is that it is not restricted to a specific type of network (optical, electrical), much rather it can be employed for configuring any network that comprises the above mentioned nodes and links. Furthermore, it is also a characteristic of the method of the present invention that it can be employed in conjunction with any type of optimization criterion, i.e. is not restricted to specific criteria. In other words, the method of the present invention is highly flexible.

### [Brief description of figures]

The present invention will become more readily understandable in light of the following detailed description of embodiments thereof, when taken together with the appended figures, in which:
- Fig. 1: is a schematic representation of a simplified network for explaining the problem of configuring a network;
- Fig. 2A: shows one schematic configuration of the network shown in figure 1;
- Fig. 2B: shows another schematic configuration of the network shown in figure 1;
- Fig. 3: is a flow chart showing the basic procedure of the method according to the present invention;
- Fig. 4a: shows a schematic example of a node having two links, where each link has three sublinks;
- Fig. 4b: shows the edges and vertices representing the node and links of Fig. 4a, and explains the assigning of weights;
- Fig. 4c: shows only the graph representing the arrangement of Fig. 4a;
- Fig. 5a: shows a schematic example of a node having four links, where each link has three sublinks;
- Fig. 5b: shows the edges and vertices representing the node and links of Fig. 5b, and explains the assigning of weights;
- Fig. 5c: shows only the graph representing the arrangement of Fig. 5a;
- Fig. 6a: shows an example of network;
- Fig. 6b: shows the graph that models the links of the network of Fig. 6a;
- Fig. 6c: shows the graph that models the links and nodes of the network of Fig. 6a;
- Fig. 7a: shows one model of an OADM node;
- Fig. 7b: shows another model of an OADM node;
- Fig. 7c: shows yet another model of an OADM node; and
- Fig. 8: shows a model of an OXC node.

### [Detailed description]

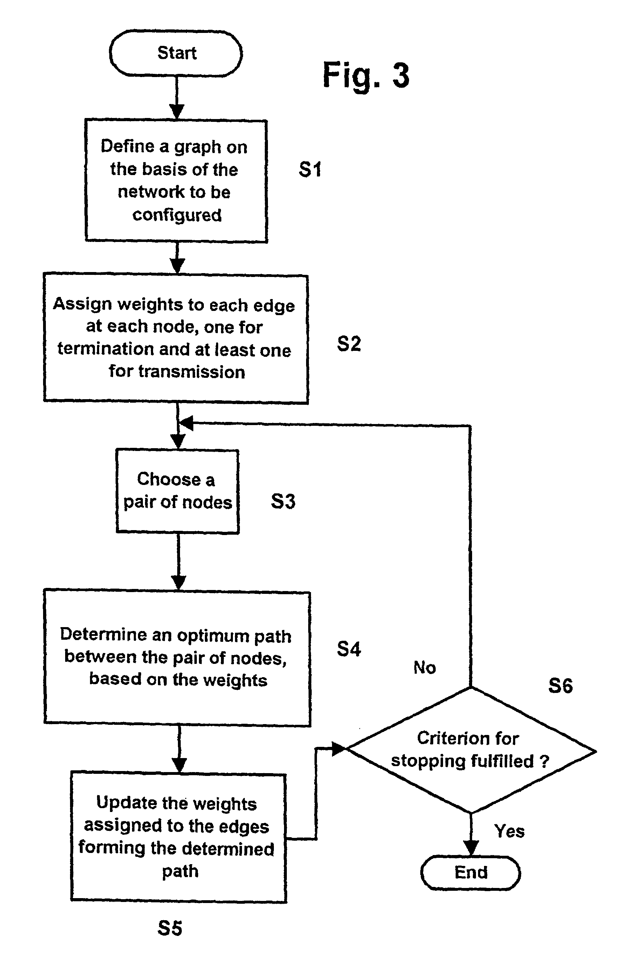

Figure 3 shows a flow chart that explains the basic procedure of the present invention.

In a first step S1, a graph consisting of edges and vertices is defined on the basis of the network to be configured. A vertex is the end of an edge, so that each edge has two vertices. The graph is defined such that edges represent sublinks, parallel edges represent links that comprise said sublinks and vertices and edges represent nodes.

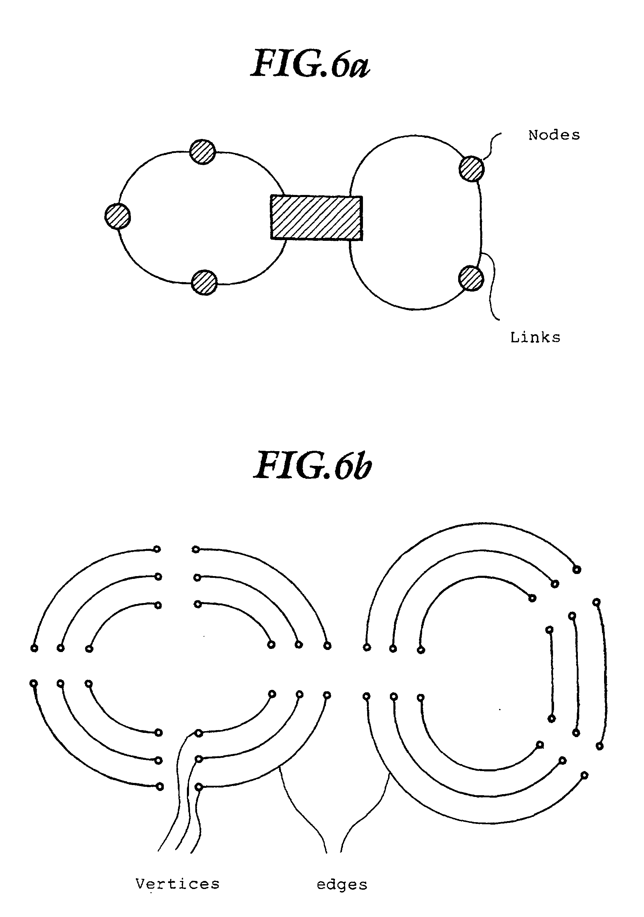

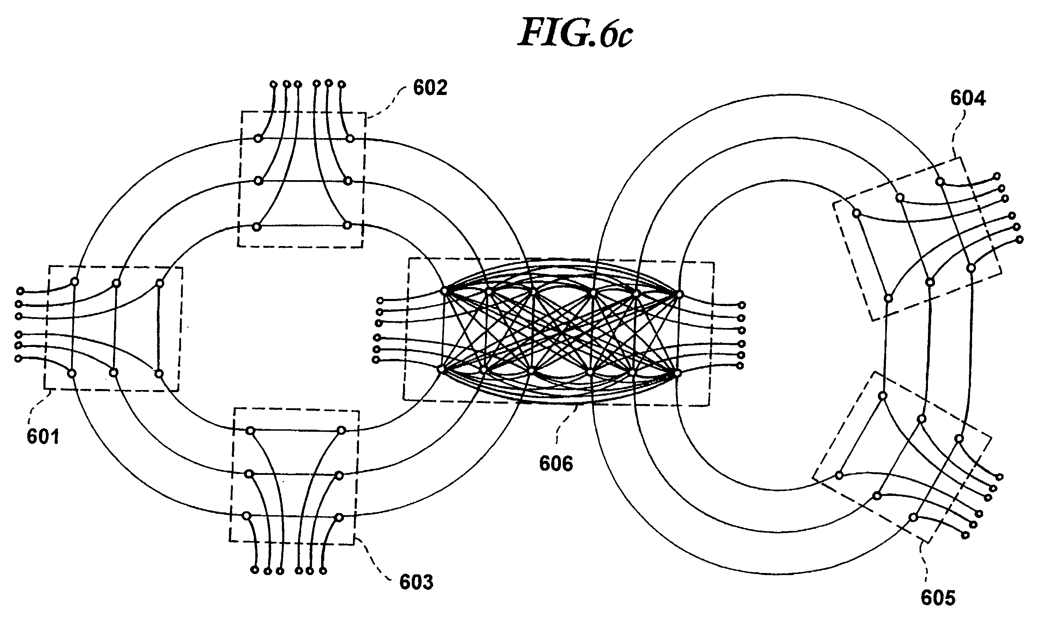

An example is shown in Fig. 6a, 6b and 6c, where Fig. 6a shows a network topology consisting of nodes and links. Fig. 6b shows the corresponding graph consisting of edges and vertices that represent the links shown in Fig. 6a. As can be seen, the links in Fig. 6a are assumed to have three sublinks each, so that three parallel edges represent each link. Fig. 6c additionally models the nodes shown in Fig. 6a. As can be seen, in the present example the nodes represented by 601 to 605 are assumed to be such that each sublink can only be transmitted to one other sublink (represented by a line between the vertex of one edge and the vertex of another edge) or can be terminated (represented by a line leading out of the dashed box). The node represented by 606 is assumed to be such that each sublink can be transmitted to each other sublink, which is represented by each vertex being connected to each other vertex, or can be terminated, which is represented by lines leading from the vertices to the outside of the dashed box. The graph shown in Fig. 6c is a connected graph.

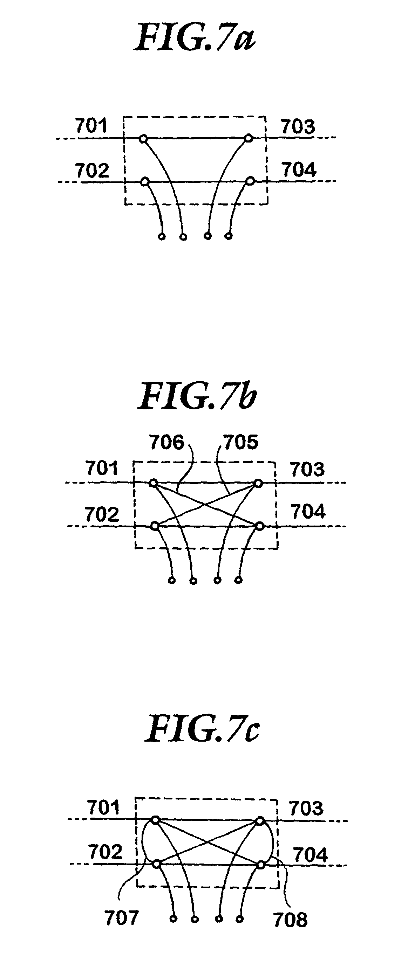

More examples of modeling nodes are shown in Fig. 7. In Figures 7a to 7c four edges 701 to 704 are shown, 701, 702 coming from the right, 703, 704 coming from the left. These represent two sublinks respectively. Fig. 7a shows a model of a an OADM (optical add and drop multiplexing) node in a WDM network, in which only transmission from one sublink to another sublink is allowed (represented by the line between two vertices), or termination (represented by lines leading outside of the dashed box). Fig. 7b shows a model of an OADM node having the capabilities shown in Fig. 7a, but additionally allowing wavelength translation. Wavelength translation means that one wavelength (i.e. sublink) can be switched to a different wavelength. Accordingly each vertex from an edge representing a sublink is connected to the two vertices on the other side, i.e. additional lines 705, 706 are added. Finally, Fig. 7c shows the model of an OADM node having the capabilities already shown in Figures 7a and 7b, but additionally having the so called loop back function, which means that a sublink in one link can be switched to another sublink in the same link. In other words, the wavelength in one link can be translated into another wavelength in the same link. This is represented by the lines 707, 708 connecting the vertices on the right side with one another, and those on the left side with one another, respectively.

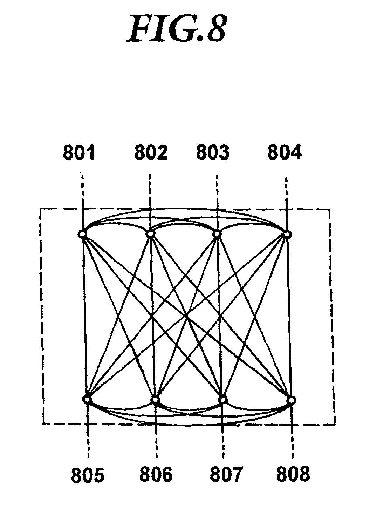

Figure 8 shows another example of a model of a node. The model represents an OXC (optical cross connect) node in a WDM network. Four edges 801-804 come from the top, and four edges 805-809 come from the bottom. Each edge represents a wavelength. The node is such that it can transmit the wavelength to the same wavelength on another link (as in the case of the OADM node in Fig. 7a), can translate the wavelength to another wavelength on another link (as in the case of the OADM node shown in Fig. 7b), and can loop back the wavelength to another wavelength on the same link (as in the case of the OADM node shown in Fig. 7c). It should however be noted that this example node does not provide termination, and therefore the model does have any corresponding lines. The present invention is naturally also applicable to this case.

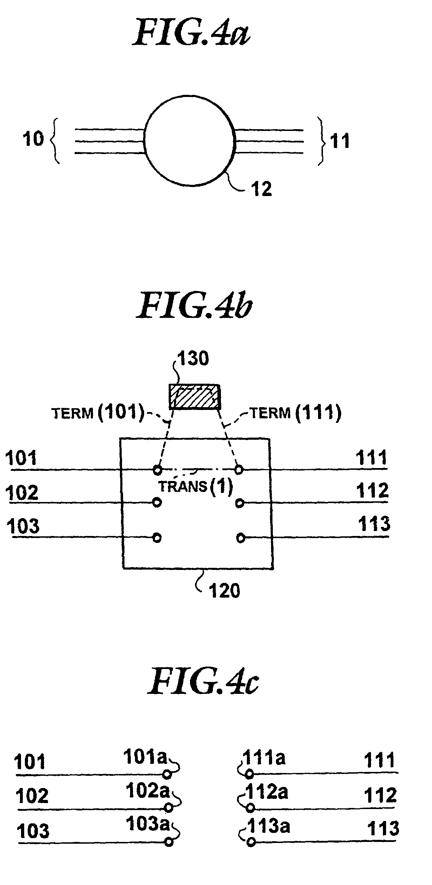

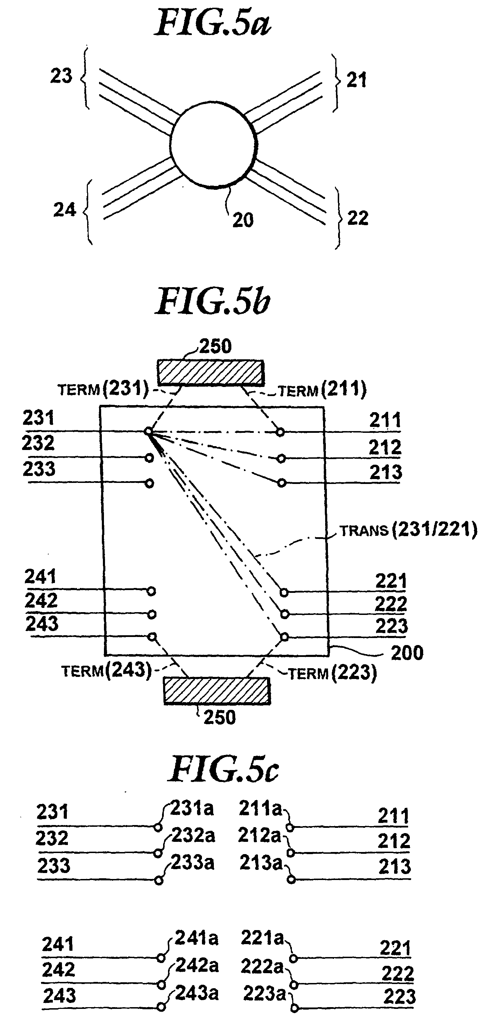

Then, in step S2, weights are assigned to each edge at each node, at least one for termination and one for transmission. If the edge to which weights are being assigned can be transmitted to more than one other edge (i.e. the corresponding node is such that a sublink can be transmitted to more than one other sublink, e.g. an OXC node in a WDM network), then each possible transmission is assigned a weight. This is explained in connection with figures 4 and 5.

Fig. 4a shows a node 12, into which two links 10 and 11 lead. The links are represented by three lines, which is intended to indicate that each link comprises three sublinks. As an example, the node and links in Fig. 4a could be an OADM node in a WDM network, in which case the three sublinks would be three different wavelengths. It is assumed that node 12 is such that each sublink of one link can be terminated or transmitted to one sublink of the other link. Furthermore, the links are assumed to be bidirectional.

Fig. 4c shows the graph corresponding to the nodes and links shown in Fig. 4a, where 101, 102 and 103 refer to the edges that correspond to the sublinks in link 10, 111, 112 and 113 refer to the edges that correspond to the sublinks in link 11. Reference numerals 101a to 103a and 111a to 113a represent the vertices associated with edges 101 to 103 and 111 to 113, respectively.

Fig. 4b shows the graph of Fig. 4c and explains the assignment of weights for said graph. The box referred to as 130 is not a part of the graph, but is included in Fig. 4b to better explain the assigning of weights. Furthermore the rectangle referred to as 120 indicates node 12, which is represented by the edges and vertices therein. The dashed lines between edge 101 and box 130, and between edge 111 and box 130 represent the termination of the corresponding sublinks, whereas the dash-dot line between edges 101 and 111 represents the transmission between the corresponding sublinks. Accordingly, edge 101 is assigned weight Term (101) for termination and weight Trans (1) for transmission. Edge 111 is assigned weight Term (111) for termination and the same weight as edge 101 for transmission, i.e. Trans(1), because setting the edges 101 and 111 to transmission is mutual.

A similar assigning of weights to edges 102, 103 and 112, 113 is performed, which for the sake of clarity is not shown in Fig. 4b. In other words, edge 102 is assigned a weight Term(102) for termination and a weight Trans(2) for transmission, where Trans(2) is also the weight for transmission of edge 112. Similarly, edge 103 is assigned a weight Term(103) for termination and Trans(3) for transmission, where Trans(3) is also the weight for transmission of edge 113. Finally, weights Term(112) and Term(113) for termination are also assigned to edges 112 and 113, respectively.

Fig. 5a shows a node 20, into which four links 21, 22, 23 and 24 enter. Each link is represented by three lines, to thereby indicate that each link comprises three sublinks. As an example, node 20 could be an OXC node in a WDM network. In this case the three sublinks would be three different wavelengths. It is assumed that each sublink can be terminated or transmitted to one of the eleven remaining sublinks. The links in Fig. 5a are assumed to be bi-directional.

Fig. 5c shows the graph corresponding to the arrangement of Fig. 5a. The edges 211, 212, and 213 represent link 21, the edges 221, 222 and 223 represent link 22, the edges 231, 232 and 233 represent link 23, and the edges 241, 242 and 243 represent link 24. Reference numerals 211a to 213a, 221a to 223 a, 231a to 233a and 241a to 243a represent the vertices associated with edges 211 to 213, 221 to 223, 231 to 233 and 241 to 243, respectively.

Fig. 5b shows the graph of Fig. 5c and explains the assigning of weights in said graph. Similarly as with box 130 in Fig. 4b, the boxes 250 in Fig. 5b are not part of the graph, but serve the purpose of better explaining the termination. Furthermore the rectangle referred to as 200 indicates node 20, which is represented by the edges and vertices therein. The dashed lines between edge 231 and box 250 represents the termination and is accordingly assigned a weight Term(231) for termination. Again, for the purpose of clarity in the figure, not all weights for termination are shown, but it is to be understood that each edge is assigned a weight for termination Term(edge). As examples, Fig. 5b furthermore shows the weights for termination Term(211), Term(223) and Term(243) that terminate edges 211, 223 and 243, respectively.

Fig. 5b also shows dash-dot lines between edge 231 and edges 211 to 213 and 221 to 223. These dash-dot lines represent transmission between the respective edges, i.e. the corresponding sublinks. In accordance with the assumptions mentioned in connection with Fig. 5a, it is to be understood that a transmission can also be set between edge 231 and edges 232, 233, 241, 242 and 243, but this is not shown in Fig. 5b for the sake of making the figure easier to understand. Also Fig. 5b only shows one weight for transmission Trans(231/221) between edges 231 and 221, but it is to be understood that each transmission between two edges X and Y (where X and Y represent the edges) is assigned a weight for transmission Trans(X/Y). In summary, each edge X is assigned a weight for termination Term(X) and 11 weights for transmission Trans(X/Y), where Y represents the remaining eleven edges, respectively. Similarly as in the case of Fig. 4b, transmission is mutual, so that the weight for transmission Trans(X/Y) is assigned to both edges X and Y.

Regarding the size of the weights assigned to each edge, the present invention is again characterized by its flexibility, as any suitable criterion can be applied for choosing these sizes. In other words, this criterion can be determined before applying the method of the present invention, depending on the requirements, restrictions and properties of the network to be configured, and on how the network is to be optimized. This will be explained in more detail further on.

Referring now again to Fig. 3, the step of assigning initial weights (S2) is followed by step S3, in which a first pair of nodes is chosen. The criterion for choosing the pair can again be flexibly chosen in accordance with the requirements and constraints of the individual application. This will also be explained in more detail further on. As an example, the first node pair can be determined on the basis of traffic demand as the pair between which the average traffic demand is highest.

Then, in step S4 an "optimum" path between the two nodes is determined on the basis of the weights encountered along the path. A path is a sequence of sublinks (edges) between the two nodes. The weights encountered along the path are the weights for termination or transmission that make up the path, and the possible weights for the edges (sublinks). Sublinks can e.g. all have weights of zero, but can just as well also have weights assigned to them that are larger than zero. This can be better understood by referring again to the examples shown in Fig. 4b and 5b. One possible path through node 120 in Fig. 4b is constituted by edge 111, the transmission to edge 101 and then edge 101. The encountered weights are then simply Trans(1). On the other hand, along the path that is constituted by edge 111, the termination (symbolized by the dashed line to box 130), the reentering into the network to edge 101 (symbolized by the dashed line between box 130 and edge 101) and edge 101, the weights are Term(111) and Term(101). Another possible path through node 120 would be from edge 111 through termination and reentering over 130 to edge 102 or 103. In these cases the encountered weights would be Term(111) and Term(102) (not shown in Fig. 4b) or Term(103) (not shown in Fig. 4b). It is clear that any way that leads from one edge into node 120 to another edge into 120, constitutes a part of a path leading through node 120.

As an example, if the network of Fig. 1 were to be configured, and the two above mentioned nodes were nodes 1 and 7, then paths from 1 to 7 would lead through nodes 3 and 5, i.e. nodes 3 and 5 would contribute to the encountered weights in the way explained above in connection with Fig. 4b.

It is readily understandable that the weights encountered along a path are determined in a similar way in the example shown in Fig. 5b. For example, the weight encountered along the path that has edge 231, the transmission to edge 221 and edge 221 as a part would be Trans(231/221), whereas the weights encountered along the path that has edge 231, the termination (symbolized by the dashed line from 231 to box 250), the reentering at edge 211 (symbolized by the dashed line from box 250 to edge 211) and edge 211 as a part, are Term(231) and Term(211).

The criterion for what is to be considered as an optimum path can be flexibly chosen, as will again be explained in more detail further on. As an example, the criterion can be that the path with the lowest summed weight, where the summed weight is the sum of all the weights encountered along the path, is the optimum path.

Returning now to the basic procedure explained in Fig. 3, after having determined the optimum path in S4, the weights assigned to the edges forming the determined path are updated in step S5, such that, for each node on said path
- the weight for transmission assigned to an edge that in said path is transmitted through said node is decreased with respect to the initial weight for transmission,
- the weight for transmission assigned to an edge that in said path is terminated at said node is increased with respect to the initial weight for transmission,
- the weight for termination assigned to an edge that in said path is transmitted through said node is increased with respect to the initial weight for termination, and
- the weight for termination assigned to an edge that in said path is terminated at said node is decreased with respect to the initial weight for termination.

An example of this will be given by again referring to Fig. 4b. If the determined path has a part that leads through node 120, where said part comprises edge 111, the transmission to edge 101 and edge 101, then a new weight for transmission Trans(1) is assigned, which is smaller than the initial weight, and the new weights for termination Term(111) and Term (101) are greater than the initial weight. As another example, if the determined path has a part that comprises edge 111, the termination of edge 111, the reentering to edge 101 and edge 101, then the weight for transmission Trans(1) is updated to a higher value, and the weights for termination Term(101) and Term(111) are updated to lower values. Finally, as another example, if edge 101 is terminated at node 120 and there is no corresponding reentering at edge 111 because node 120 is an end point (i.e. one of the pair of nodes between which a path is being determined), then Trans(1) is updated to a higher value and Term(101) to lower value. Term(111) may remain unchanged in this case, but it is preferable that Term(111) is also updated to a lower value.

Regarding the precise values of the updated weights, similar to the corresponding remarks on the precise values of the initial weights, the method of the present invention is flexible in that any values can be chosen that are suitable for the specific requirements of the specific configuration task. Preferably, in a transmitted path the weight for transmission is updated to zero and the weight for termination is updated to a value much larger than the initial weight for termination, e.g. to a value 1000 times larger, or to the numerically feasible equivalent of infinity. Also, in a node where transmission can take place to more than one edge, the weight for transmission to the edge to which transmission is set in said path is updated to zero, whereas the weights for transmission to other edges to which the path does not transmit are set to a value much larger than the initial weight, similarly as with the weight for termination. On the other hand, in a terminated path the weight (or weights) for transition is preferably updated to a very large value, e.g. 1000 times larger than the initial value, or to the numerically feasible equivalent to infinity, and the weight for termination is preferably updated to a value between zero and the initial value. As already mentioned, these values are only examples, and the invention is by no means restricted thereto.

Returning now to Fig. 3, the updating in step S5 is followed by the choice of another pair of nodes ( again step S3) and the repeating of the cycle of path determination, updating and choosing of a new pair of nodes until a criterion for stopping is fulfilled (step S6). As with the other criteria mentioned above, the invention is also flexible with respect to this criterion, as any suitable criterion can be applied. As an example, the cycle can be continued until each possible pair of nodes has been taken into account, i.e. each consecutive cycle chooses a new pair for which an optimum path has not yet been determined, until all possible pairs have been taken into account. In the case of bi-directional links, a pair A-B is equal to a pair B-A, where A and B stand for the nodes forming a pair, and in the case of unidirectional links, A-B and B-A are two distinct pairs that need to be taken into account separately. As another example, it is also possible that the cycling stops after the pairs derived from a limited number of nodes have been taken into account, e.g. in the case of a reconfiguration of only a part of a network, said part consisting of said limited number of nodes.

When the procedure is finished, the configuration is given by the weights assigned to the edges. In other words, if an edge at a given node has a weight for termination that is lower than the initial weight for termination, then the node is set for terminating the corresponding sublink, and if the weight for transmission is lower than the initial weight, then the corresponding sublink is set to transmission.

The present invention is preferably applied to optical networks, such as WDM networks or SDM networks. In a WDM network, the independent sublinks comprised in a link are constituted by different wavelengths, i.e. the quality for discerning the sublinks is the optical wavelength. In an SDM network, the independent sublinks are constituted by individual fibers having a defined position, i.e. the quality for discerning the sublinks is the location or position. It should however be clear that the present invention is by no means restricted to WDM or SDM networks, or to optical networks in general, as it can be applied to any system having several independent sublinks in at least some of the links between nodes, where the network needs to be configured in the sense that the nodes need to be set into a state of termination or transmission with respect to the independent sublinks attached to said node. Naturally, the network can be such that different links have a different number of sublinks.

The terms termination and transmission are used in the same sense as in the introduction, which is herewith incorporated into the disclosure of the invention. In other words, the term termination means that a signal can be removed from the network, whereas transmission means that a signal coming into a node on a sublink must leave said node on another sublink, i.e. the signal is not terminated.

It should also be understood that the method of the present invention can be applied to any topology of a network, e.g. star, ring, variations of star or ring, or any arbitrary set of nodes connected by links.

The method of the present invention is also highly flexible and versatile, as it is not restricted to specific criteria for optimizing a network. Much rather, it has the distinct feature and advantage that any suitable or desired set of criteria can be employed, depending on the given network and the requirements and constraints.

The first criterion relating to the assignment of weights (S2 in Fig. 3) generally depends on the specific type of nodes that are represented by the vertices and edges, and on the strategy for optimizing the network to be configured or reconfigured. For example, in a WDM network using OADM nodes that do not contain wavelength changing possibilities, if it is desired to preferably keep traffic on the optical level, the initial weights for termination will be higher than those for transmission, because transmission is then preferred to termination. On the other hand, if electrical cross-connect nodes (EXC) are used in said optical network, then all initial weights for edges and vertices representing such EXC nodes will be the same, as all incoming signals are converted into electrical signals, only that the signals for transmission are then reconverted into optical signals and reintroduced into the optical network.

In connection with the above example of EXC nodes in a WDM network, attention should again be drawn to the general nature of the distinction between termination and transmission, that does not depend on the specific nature of the network or nodes being configured. As just mentioned, the optical signals entering an EXC node are all converted into electrical signals, regardless of the fact if the sublink (in this case wavelength) is terminated or transmitted. A signal that is on a terminated wavelength can be reconverted into an optical signal and reintroduced into the network if the momentary traffic control requires this. This process is physically identical to what happens to a signal on a sublink set for transmission, as this signal is also first converted into an electrical signal and later reconverted into an optical signal and reintroduced into the optical network. The basic difference is however that in accordance with specific sublinks being set for transmission or termination in a node, the signal on the terminated sublink can be reintroduced, but also can be permanently removed from the network, whereas the signal on the transmitted line must be reintroduced, i.e. cannot be terminated.

As the second criterion, i.e. the choosing of a pair of nodes to be taken into account (S3 in Fig. 3) a sorting of nodes according to traffic demand between the nodes can be used, i.e. the first chosen pair is the pair with the highest traffic demand therebetween, the second pair is the pair with the second highest demand etc.. In the case of an optical network this results in decreased electrical processing in the configured network, i.e. the traffic load is carried mostly by the optical layer and less by the electrical layer (electrical switches), because the reintroduction of signals from terminated sublinks into the optical network will entail processing on the electrical layer that can be avoided if the signal is transmitted. On the other hand this means that more resources will be used at the optical layer. This is a good strategy if the bottleneck in the specific network being configured or being reconfigured is the capacity of electrical processing facilities. However, the second criterion can be any other suitable criterion. For example, the step of choosing node pairs can also be done by sorting according to distance. The "distance" is the number of links that are crossed along a path. This is also referred to as the number of "hops", indicating the number of nodes over which a signal hops along the path. This criterion can be refined by also taking into account the physical length of links (and thereby of independent sublinks comprised by said link), e.g. when sorting pairs having an equal number of hops. The choosing of pairs in accordance with distance minimizes the resources at the optical layer of the configured (or reconfigured) optical network, but increases the amount of electrical processing. It is also possible to combine the above criteria of sorting in accordance with distance or with traffic demand, e.g. by means of a function that is a linear combination of both with proper weights. However, it would equally well be possible to not employ a specific strategy for the second criterion, but to simply accomplish the step of choosing pairs by selecting node pairs at random.

As with the first and second criterion, the third criterion relating to the determination of a path between two chosen nodes (S4 in Fig. 3) can be chosen in accordance with the given requirements and constraints of the network to be configured. The simplest criterion will be to choose the path that has the smallest summed weight, i.e. the path among all the possible paths between the two nodes, where the sum of the weights along said path is the smallest. Another possible criterion would be to modify the summed weight by a parameter associated with the distance between the two nodes and select the optimal path according to said modified quantity. In a general sense, the third criterion can be a function of the weights along a path, that yields a "cost" of said path. The term "cost" relates to a general property, which can be equal to the monetary cost, the cost in terms of energy, the cost in necessary technical processes (e.g. switching), or other definitions. Naturally, this "cost" can also be a combination of some or all of the mentioned definitions of the term. In the mentioned general sense, the third criterion will be to determine the path having the lowest "cost".

When using the simple approach of determining the path by finding the path with the lowest summed weight, this path can also be termed the "shortest" path (i.e. in this specific context, the summed weight of the path is viewed as its "length", not to be confused with the above mentioned distance), and the desired path be determined with the help of a shortest path algorithm, such as Dijkstra's algorithm. A description of this algorithm is not necessary, as it is well known in the art, and the present invention, due to its feature of inherent flexibility, is not concerned with the specific algorithm used for path determination.

During the updating process (S5 in Fig. 3), the weights are changed in accordance with the weight and the property that the weight relates to, i.e. termination or transmission. With regard to the precise numerical values for these updated weights, the method of the present invention again is highly flexible, as these can be chosen in accordance with the specific requirements and desires accompanying the network to be configured, as well as with the specific numerical requirements and constraints of the system used for computation. With respect to the teaching of the present invention, it is clear that the precise numerical values of the initial or updated weights can be arbitrary, as the inventive method is only concerned with the relative change of these weights.

In the following, at first examples will be given of a cases in which there is only one possibility of transmission, i.e. the transmission from a sublink of one quality to another sublink of the same quality. Consequently there is only one weight assigned to transmission. This is the case exemplified in Fig. 4, as already described above. The case of a possible transmission to more than one other sublink is described later.

As an example, the weight for transmission assigned to an edge that in a path is set to transmission is preferably updated to a far smaller number than the initial weight, preferably to zero. On the other hand, the weight for termination assigned to an edge that in a path is set to transmission is preferably updated to a far larger number than the initial weight, preferably to the numerically feasible equivalent to infinity. In the context of the inventive method, such a large weight means that a terminating path will no longer be possible for that edge. When an edge along a path is terminated, then the weight (or weights) for transmission of that edge is updated to a very large value, preferably the numerically feasible equivalent to infinity, and the weight for termination will be reduced with respect to the initial value, however preferably not to zero, but to a value between the initial value and zero. The values mentioned above are a preferred example, but it should be clear that other values may be chosen, depending on the requirements and constraints, as already mentioned.

The method of the present invention can also be applied to networks using nodes that are not only capable of being set to transmission to one sublink, but also capable of being set to transmission to a plurality of sublinks, e.g. of connecting one independent sublink of one quality with one of a plurality of other independent sublinks of the same quality and/or with one of a plurality of other independent sublinks of a different quality. An example for such nodes are OXC (optical cross-connect) nodes in WDM networks, which can terminate an incoming wavelength, connect an incoming sublink of one wavelength with an outgoing sublink of the same wavelength, or can connect an incoming sublink of one wavelength with an outgoing sublink of a different wavelength. This last possibility is referred to as wavelength translation. If nodes are capable of transmission in the above defined sense, then the step of assigning weights to edges must be complemented by an assignment of further weights for transmission to an edge in a node, namely a respective weight must be assigned for each possibility of transmitting to another edge. The step of updating the weights must be complemented by the updating of these supplementary weights. Except for these complementary steps and the fact that the number of possible paths between two nodes increases, the method of the invention is unchanged, as the basic cycle of determining pairs of nodes, determining a path that is optimal in accordance with a given criterion between said nodes and then updating the weights for the edges is the same. Again, this demonstrates how versatile and generally applicable the present invention is.

Regarding the fourth criterion of ending the cycle of determining pairs of nodes, determining a path that is optimal in accordance with a given criterion between said nodes and then updating the weights for the edges, the method of the present invention is again highly flexible and versatile, as it is not restricted to any specific criterion. If the desired configuration relates to the entire network, i.e. every node needs to be set, then the procedure can be repeated until paths are established between all the nodes. If only a part of the network is to be configured, e.g. in a local reconfiguration, then the procedure can be repeated until new paths have been established for the concerned nodes.

According to a further embodiment of the invention, in systems in which the traffic demand to be routed between certain nodes can exceed the transmission capacity of certain sublinks, the method contains a supplementary measure for taking the transmission capacity of the sublinks into account. In this embodiment, the transmission capacity of each sublink and the traffic demand between each pair of nodes is assumed to be known. According to the method of this embodiment, the step of determining the optimum path between two nodes (referred to as S4 above) is complemented by eliminating those paths from consideration that contain sublinks which do not have enough transmission capacity to handle the amount of traffic between the two nodes under consideration.

This can e.g. be accomplished by first determining an optimum path as stated above (e.g. based on the summed weight) and then checking if each sublink on that path is capable of handling the traffic demand assigned to the node pair under consideration. If each sublink can handle the traffic, then the given path is selected as optimum and the process continues by updating the weights, whereas if the transmission capacities of one or more of the sublinks is exceeded by the traffic demand, then this path is discarded and the next best path is chosen (when using the summed weight as the criterion, the path having the next lowest summed weight), and it is again checked if each sublink along the path can handle the traffic demand. This process is repeated until a path is determined that can handle the traffic demand, i.e. containing sublinks that have enough transmission capacity for handling the traffic demand between the nodes under consideration. Another possibility is to first check all possible sublinks lying between the two nodes under consideration, and then determine the optimum path only from those paths that contain sublinks capable of handling the given traffic demand.

### [Best Mode]

In the following an embodiment of the invention will be described, which the inventor presently considers the best mode of putting the invention to practice. In accordance with this embodiment, the method described above and explained in Fig. 3 is applied to the task of configuring a bi-directional wavelength division multiplexing (WDM) network. In such a WDM network, the independent sublinks are formed by different wavelengths.

The defining of a graph is done as explained above, i.e. each wavelength in a link corresponds to an edge in the graph, parallel edges represent links, and the nodes are represented by the edges and vertices.

Then weights are assigned. If the node is an OADM (optical add and drop) node, then the assignment corresponds to what has been explained in connection with Fig. 4. In other words, if the node is an OADM node, then edges 101-103 and 111-113 represent individual wavelengths in respective links. In the example, 111 would be a wavelength in link 11, and 101 would be the same wavelength in link 10. In other words, the OADM node can only transmit to the same wavelength, i.e. a wavelength change is not possible. Therefore, one weight for termination and one weight for transmission is assigned to each edge. In accordance with the present embodiment, the initial weight for termination (e.g. 50) is higher than that for transmission (e.g. 25), because, if it is desired that traffic remain on the optical layer, transmission is preferred to termination.

If the node is an OXC (optical cross connect) or EXC (electrical cross connect) node, then the assignment of weights corresponds to what has been explained in connection with Fig. 5. In both cases (OXC and EXC), the edges 211-213, 221-223, 231-233 and 241-243 represent wavelengths in the links 21, 22, 23 and 24. It is assumed that the wavelengths corresponding to edges 211, 221, 231 and 241 are the same, that the wavelengths corresponding to edges 212, 222, 232 and 242 are the same, and that the wavelengths corresponding to edges 213, 223, 233 and 243 are the same.

In the case of the example of Fig. 5b, each edge is assigned one weight for termination and 11 weights for transmission. If the node is an OXC node, then as in the case of OADM the initial weight for termination (e.g. 50) is set higher than for transmission to another edge having the same wavelength (e.g. 25), but the initial weight for transmitting to another edge of a different wavelength is assigned higher than for transmitting to the same wavelength (e.g. also 50), because the changing to a different wavelength requires more complicated processing. Therefore, the weights for edge 231 would e.g. be
Term(231)=50;
Trans(231/211) = Trans(231/221) = Trans(231/241) = 25; and
Trans(231/212) = Trans(231/213) = Trans(231/222) =
Trans(231/223) = Trans(231/232) = Trans(231/233) =
Trans(231/242) = Trans(231/243) = 50.

Weights are similarly assigned to the other edges.

If the node is an EXC node, then all initial weights are the same (e.g. 25).

Then, in accordance with the present embodiment, the first pair of nodes is chosen in accordance with the average traffic demand, i.e. the first pair is the pair having the highest traffic demand therebetween. Then an optimum path is determined according to the summed weight encountered along the path. In accordance with this embodiment, the summed weight of a possible path is treated like a length, and the path with the shortest length, i.e. lowest summed weight, is then determined with Dijkstra's algorithm. Should there be several paths having the same summed weight, then a supplementary criterion can be employed, such as taking the physical distance of the links or the number of hops necessary on the physical topology in order to reach one node from the other into account, or one of the paths can simply be chosen at random.

After the optimum path is determined, the weights along said path are updated, as explained previously. In the present embodiment, the weight for transmission to a specific edge is updated to zero for an edge in the path that transmits to said specific edge, whereas the weights for termination are updated to a very large number (e.g. 10⁶) in the edges that transmit, and also the weights for transmission to edges other than said specific edge are updated to a very large number. The weights for termination are updated to a value between zero and the initial value for termination (e.g. 25) for edges in the path that terminate, whereas the weights for transmission are updated to a very large number (e.g. 10⁶) in the edges that terminate, regardless if the node is an OADM, OXC or EXC node.

Then a new pair of nodes is chosen, namely the pair that has the second highest average traffic demand and the cycle is repeated, where each new pair is chosen in the order determined by decreasing average traffic demand, until an optimum path has been determined between every possible pair, where it should be noted that under the above assumption of bi-directional links, pairs A-B and B-A are treated as one pair. If unidirectional links are chosen, then A-B and B-A are treated as two distinct pairs.

The resulting configuration is then given by the weights assigned to the edges, i.e. if the weight for termination of an edge is set to the low value, then the corresponding sublink is configured to be terminated and if the weight for transmission of an edge to another specific edge is set to the low value, then the corresponding sublink is configured to be transmitted to the sublink corresponding to the other edge.

Due to the above choice of node pair selection criterion, initial weights and updated weights, the resulting configuration prefers keeping traffic on the optical layer.

The present invention is not restricted to the above described embodiments, much rather it is defined by the appended claims. Reference numerals in the claims serve the purpose of better understanding and do not restrict the scope.

## Claims

1. A method for configuring or reconfiguring a network consisting of nodes (1, 3, 5, 7) and links (2, 4, 6), where at least some of said links comprise more than one independent sublink (2a, 2b, 4a, 4b, 6a, 6b), said independent sublinks being discernible by a predetermined quality and being capable of carrying a signal independently of the other sublinks in said link, wherein said nodes connected to said links comprising more than one independent sublink are capable of at least being set such that each independent sublink is terminated at said node or transmitted to another independent sublink, said method comprising:
defining a graph in which edges represent sublinks, parallel edges represent links that comprise said sublinks and vertices and edges represent nodes,
assigning initial weights to each edge at each node, respectively for transmission and termination, according to a first predetermined criterion,
choosing a first pair of nodes according to a second predetermined criterion,
determining a series of said independent sublinks forming a specific path between said first pair of nodes, wherein said specific path fulfills a third predetermined criterion with respect to the other possible paths between said first pair of nodes, said third criterion for determining a path being associated with the weights of the edges along a path,
updating the weights assigned to the edges forming said specific path, for each edge of said path in each node along said path, wherein
- the weight for transmission to a specific edge assigned to an edge that in said path is transmitted through said node to said specific edge is decreased with respect to the initial weight for transmission,
- the weight for transmission assigned to an edge that in said path is terminated at said node is increased with respect to the initial weight for transmission,
- the weight for termination assigned to an edge that in said path is transmitted through said node is increased with respect to the initial weight for termination, and
- the weight for termination assigned to an edge that in said path is terminated at said node is decreased with respect to the initial weight for termination, and
choosing another pair of nodes that is different from said first pair, in accordance with said first criterion, and repeating said process of determining a path, updating the weights and choosing a further pair of nodes until a fourth predetermined criterion is fulfilled.

2. The method of claim 1, wherein said network is an optical network.

3. The method of claim 2, wherein said network is a space division multiplexing network and said predetermined quality is the spatial location.

4. The method of claim 2, wherein said network is a wavelength division multiplexing network and said predetermined quality is the wavelength.

5. The method of claim 1, wherein according to said first criterion, the initial weight for transmission to an edge corresponding to a sublink of the same quality is smaller than the initial weight for termination, and the initial weight for transmission to an edge corresponding to a sublink of the same quality is also smaller than the initial weight for transmission to an edge corresponding to a sublink of a different quality.

6. The method of claim 5, wherein said initial weight for termination and said initial weight for transmission to an edge corresponding to a sublink of a different quality are identical.

7. The method of claim 1, wherein in accordance with said second criterion, said choosing of pairs of nodes is done in dependence on the average traffic demand between nodes, such that the pair of nodes having the largest traffic demand is chosen first, and then further pairs are chosen in the order of decreasing traffic demand.

8. The method of claim 1, wherein in accordance with said second criterion, said choosing of pairs of nodes is done randomly.

9. The method of claim 1, wherein in accordance with said second criterion, said choosing of pairs of nodes is done in dependence on the distance between nodes, such that the pair of nodes having the shortest distance is chosen first, and then further pairs are chosen in the order of increasing distance, said distance being one of the physical distance and the number of hops between the nodes.

10. The method of claim 1, wherein in accordance with said second criterion, said choosing of pairs of nodes is done in dependence on a function of the traffic demand and the distance between nodes, said distance being one of the physical distance and the number of hops between the nodes.

11. The method of claim 1, wherein in accordance with said third criterion said specific path is selected from all the possible paths between said nodes as the path having the smallest summed weight.

12. The method of claim 1, wherein during the step of updating said weights
- the weight for transmission to a specific edge assigned to an edge that in said path is transmitted through said node to said specific edge is decreased to zero,
- the weight for transmission assigned to an edge that in said path is terminated at said node is increased to the numerically feasible equivalent of infinity,
- the weight for termination assigned to an edge that in said path is transmitted through said node is increased to the numerically feasible equivalent of infinity, and
- the weight for termination assigned to an edge that in said path is terminated at said node is decreased to a value between the initial weight for termination and zero.

13. The method of claim 1, wherein in accordance with said fourth criterion said process is repeated until each possible pair of nodes has been taken into account.

14. The method of claim 1, wherein in accordance with said fourth criterion said process is repeated until a predetermined set of pairs of nodes has been taken into account.

15. The method of claim 1, wherein said step of determining a series of independent sublinks forming a specific path between given nodes comprises the step of only determining such a series, in which each sublink has a transmission capacity large enough to handle the traffic demand between said given nodes.

16. A device for configuring or reconfiguring a network consisting of nodes (1, 3, 5, 7) and links (2, 4, 6), where at least some of said links comprise more than one independent sublink (2a, 2b, 4a, 6a, 6b), said independent sublinks being discernible by a predetermined quality and being capable of carrying a signal independently of the other sublinks in said link, wherein said nodes connected to said links comprising more than one independent sublink are capable of at least being set such that each independent sublink is terminated at said node or transmitted to another independent sublink, said device comprising:
a means for defining a graph in which edges represent sublinks, parallel edges represent links that comprise said sublinks and vertices and edges represent nodes,
a means for assigning initial weights to each edge at each node, respectively for transmission and termination, according to a first predetermined criterion,
a means for choosing a first pair of nodes according to a second predetermined criterion,
a means for determining a series of said independent sublinks forming a specific path between said first pair of nodes, wherein said specific path fulfills a third predetermined criterion with respect to the other possible paths between said first pair of nodes, said third criterion for determining a path being associated with the weights of the edges along a path,
a means for updating the weights assigned to the edges forming said specific path, for each edge of said path in each node along said path, wherein
- the weight for transmission to a specific edge assigned to an edge that in said path is transmitted through said node to said specific edge is decreased with respect to the initial weight for transmission,
- the weight for transmission assigned to an edge that in said path is terminated at said node is increased with respect to the initial weight for transmission,
- the weight for termination assigned to an edge that in said path is transmitted through said node is increased with respect to the initial weight for termination, and
- the weight for termination assigned to an edge that in said path is terminated at said node is decreased with respect to the initial weight for termination, and
a means for choosing another pair of nodes that is different from said first pair, in accordance with said first criterion, and repeating said process of determining a path, updating the weights and choosing a further pair of nodes until a fourth predetermined criterion is fulfilled.

## Patentansprüche

1. Verfahren zur Konfiguration oder Rekonfiguration eines Netzwerkes, welches aus Knoten (1, 3, 5, 7) und Verbindungsabschnitten (2, 4, 6) besteht, wobei zumindest einige der Verbindungsabschnitte mehr als einen unabhängigen Unter-Verbindungsabschnitt (2a, 2b, 4a, 4b, 6a, 6b) umfassen, und die unabhängigen Unter-Verbindungsabschnitte durch eine vorbestimmte Eigenschaft unterscheidbar sind und in der Lage sind, ein Signal unabhängig von anderen Unter-Verbindungsabschnitten in dem Verbindungsabschnitt zu tragen, wobei die Knoten, welche mit den Verbindungsabschnitten verbunden sind, die mehr als einen unabhängigen Unter-Verbindungsabschnitt umfassen, in der Lage sind, zumindest so gestellt zu werden, dass jeder unabhängige Unter-Verbindungsabschnitt an dem Knoten abgeschlossen wird oder auf einen anderen unabhängigen Unter-Verbindungsabschnitt übertragen wird, und das Verfahren umfasst:
Definieren eines Graphen, in welchem Kanten Unter-Verbindungsabschnitte darstellen, parallele Kanten Verbindungsabschnitte darstellen, welche die Unter-Verbindungsabschnitte umfassen, und Scheitelpunkte und Kanten Knoten darstellen,
Zuordnen von Anfangsgewichten für jede Kante an jedem Knoten, jeweils für die Übertragung und den Abschluss, gemäß eines ersten vorbestimmten Kriteriums,
Wählen eines ersten Paares von Knoten gemäß eines zweiten vorbestimmten Kriteriums,
Bestimmen einer Serie der unabhängigen Unter-Verbindungsabschnitte, welche einen spezifischen Pfad zwischen dem ersten Paar von Knoten bilden, wobei der spezifische Pfad ein drittes vorbestimmtes Kriterium bezüglich der anderen möglichen Pfade zwischen dem ersten Paar von Knoten erfüllt, und das dritte Kriterium zur Bestimmung eines Pfades mit den Gewichten der Kanten entlang eines Pfades in Zusammenhang steht,
Aktualisieren der Gewichte, welche den Kanten zugeordnet sind, die den spezifischen Pfad bilden, für jede Kante des Pfades in jedem Knoten entlang des Pfades, wobei
- das Gewicht für Übertragung auf eine spezifische Kante, welches einer Kante zugeordnet ist, die in dem Pfad durch den Knoten auf die spezifische Kante übertragen wird, bezüglich dem Anfangsgewicht für Übertragung verringert wird,
- das Gewicht für Übertragung, welches einer Kante zugeordnet ist, die in dem Pfad an dem Knoten abgeschlossen wird, bezüglich dem Anfangsgewicht für Übertragung erhöht wird,
- das Gewicht für Abschluss, welches einer Kante zugeordnet ist, die in dem Pfad durch den Knoten übertragen wird, bezüglich dem Anfangsgewicht für den Abschluss erhöht wird, und
- das Gewicht für Abschluss, welches einer Kante zugeordnet ist, die in dem Pfad an dem Knoten abgeschlossen wird, bezüglich des Anfangsgewichtes für Abschluss verringert wird, und
Wählen eines weiteren Knotenpaares, welches von dem ersten Paar verschieden ist, in Übereinstimmung mit dem ersten Kriterium, und Wiederholen des Prozesses der Bestimmung eines Pfades, Aktualisieren der Gewichte und Wählen eines weiteren Knotenpaares, bis ein viertes vorbestimmtes Kriterium erfüllt ist.

2. Verfahren nach Anspruch 1, **dadurch gekennzeichnet, dass** das Netzwerk ein optisches Netzwerk ist.

3. Verfahren nach Anspruch 2, **dadurch gekennzeichnet, dass** das Netzwerk ein Raumaufteilungs-Multiplexnetzwerk ist und die vorbestimmte Eigenschaft der räumliche Ort ist.

4. Verfahren nach Anspruch 2, **dadurch gekennzeichnet, dass** das Netzwerk ein Wellenlängenaufteilungs-Multiplexnetzwerk ist und die vorbestimmte Eigenschaft die Wellenlänge ist.

5. Verfahren nach Anspruch 1, **dadurch gekennzeichnet, dass** gemäß des ersten Kriteriums das Anfangsgewicht für die Übertragung auf eine Kante, welche einem Unter-Verbindungsabschnitt der gleichen Eigenschaft entspricht, kleiner ist als das Anfangsgewicht für den Abschluss, and das Anfangsgewicht für die Übertragung auf eine Kante, welche einem Unter-Verbindungsabschnitt der gleichen Eigenschaft entspricht, auch kleiner ist als das Anfangsgewicht für die Übertragung auf eine Kante, welche einem Unter-Verbindungsabschnitt einer verschiedenen Eigenschaft entspricht.

6. Verfahren nach Anspruch 5, **dadurch gekennzeichnet, dass** das Anfangsgewicht für den Abschluss und das Anfangsgewicht für die Übertragung auf eine Kante, welche einem Unter-Verbindungsabschnitt einer verschiedenen Eigenschaft entspricht, identisch sind.

7. Verfahren nach Anspruch 1, **dadurch gekennzeichnet, dass** in Übereinstimmung mit dem zweiten Kriterium das Wählen von Knotenpaaren in Abhängigkeit von der mittleren Verkehrsnachfrage zwischen Knoten durchgeführt wird, so dass das Knotenpaar mit der größten Verkehrsnachfrage erst gewählt wird, und dann weitere Paare in der Reihenfolge der abnehmenden Verkehrsnachfrage gewählt werden.

8. Verfahren nach Anspruch 1, **dadurch gekennzeichnet, dass** in Übereinstimmung mit dem zweiten Kriterium das Wählen von Knotenpaaren zufällig geschieht.

9. Verfahren nach Anspruch 1, **dadurch gekennzeichnet, dass** in Übereinstimmung mit dem zweiten Kriterium das Wählen von Knotenpaaren in Abhängigkeit von dem Abstand zwischen Knoten durchgeführt wird, so dass das Paar von Knoten, welches den kürzesten Abstand hat, erst gewählt wird, und dann weitere Paare in der Reihenfolge abnehmenden Abstands gewählt werden, wobei der Abstand der physische Abstand oder die Zahl von Sprüngen zwischen den Knoten ist.

10. Verfahren nach Anspruch 1, **dadurch gekennzeichnet, dass** in Übereinstimmung mit dem zweiten Kriterium das Wählen von Knotenpaaren abhängig von einer Funktion der Verkehrsnachfrage und des Abstandes zwischen Knoten durchgeführt wird, wobei der Abstand entweder der physische Abstand oder die Zahl von Sprüngen zwischen den Knoten ist.

11. Verfahren nach Anspruch 1, **dadurch gekennzeichnet, dass** in Übereinstimmung mit dem dritten Kriterium der spezifische Pfad aus allen möglichen Pfaden zwischen den Knoten als der Pfad ausgewählt wird, welcher das kleinste summierte Gewicht hat.

12. Verfahren nach Anspruch 1, **dadurch gekennzeichnet, dass** während des Schrittes der Aktualisierung der Gewichte
- das Gewicht für Übertragung auf eine spezifische Kante, welches einer Kante zugeordnet ist, die in dem Pfad durch den Knoten auf die spezifische Kante übertragen wird, auf null verringert wird,
- das Gewicht für Übertragung, welches einer Kante zugeordnet ist, die in dem Pfad an dem Knoten abgeschlossen ist, auf das numerisch machbare Äquivalent von Unendlich erhöht wird,
- das Gewicht für Abschluss, welches einer Kante zugeordnet ist, die in dem Pfad durch den Knoten übertragen wird, auf das numerisch machbare Äquivalent von Unendlich erhöht wird, und
- das Gewicht für Abschluss, welches einer Kante zugeordnet ist, die in dem Pfad an dem Knoten abgeschlossen wird, auf einen Wert zwischen dem Anfangsgewicht für Abschluss und null verringert wird.

13. Verfahren nach Anspruch 1, **dadurch gekennzeichnet, dass** in Übereinstimmung mit dem vierten Kriterium der Prozess wiederholt wird, bis jedes mögliche Paar von Knoten berücksichtigt wurde.

14. Verfahren nach Anspruch 1, **dadurch gekennzeichnet, dass** in Übereinstimmung mit dem vierten Kriterium der Prozess wiederholt wird, bis ein vorbestimmter Satz von Knotenpaaren berücksichtigt wurde.

15. Verfahren nach Anspruch 1, **dadurch gekennzeichnet, dass** der Schritt der Bestimmung einer Serie von unabhängigen Unter-Verbindungsabschnitten, welche einen spezifischen Pfad zwischen gegebenen Knoten bilden, den Schritt umfasst, dass nur eine solche Serie bestimmt wird, in welcher jeder Unter-Verbindungsabschnitt eine Übertragungskapazität hat, die groß genug ist, um die Verkehrsnachfrage zwischen den gegebenen Knoten zu bewältigen.

16. Vorrichtung zur Konfiguration oder Rekonfiguration eines Netzwerkes, welches aus Knoten (1, 3, 5, 7) und Verbindungsabschnitten (2, 4, 6) besteht, wobei zumindest einige der Verbindungsabschnitte mehr als einen unabhängigen Unter-Verbindungsabschnitt (2a, 2b, 4a, 4b, 6a, 6b) umfassen, und die unabhängigen Unter-Verbindungsabschnitte durch eine vorbestimmte Eigenschaft unterscheidbar sind und in der Lage sind, ein Signal unabhängig von den anderen Unter-Verbindungsabschnitten in dem Verbindungsabschnitt zu tragen, wobei die Knoten, welche mit den Verbindungsabschnitten verbunden sind, die mehr als einen unabhängigen Unter-Verbindungsabschnitt umfassen, in der Lage sind, zumindest so eingestellt zu werden, dass jeder unabhängige Unter-Verbindungsabschnitt an dem Knoten abgeschlossen wird oder auf einen anderen unabhängigen Unter-Verbindungsabschnitt übertragen wird, and die Vorrichtung umfasst:
eine Einrichtung zum Definieren eines Graphen, in welchem Kanten Unter-Verbindungsabschnitte darstellen, parallele Kanten Verbindungsabschnitte darstellen, welche die Unter-Verbindungsabschnitte umfassen, und Scheitelpunkte und Kanten Knoten darstellen,
eine Einrichtung zur Zuordnung von Anfangsgewichten zu jeder Kante an jedem Knoten, jeweils für Übertragung und Abschluss, gemäß eines ersten vorbestimmten Kriteriums,
eine Einrichtung zum Wählen eines ersten Paares von Knoten gemäß eines zweiten vorbestimmten Kriteriums,
eine Einrichtung zur Bestimmung einer Serie der unabhängigen Unter-Verbindungsabschnitte, welche einen spezifischen Pfad zwischen dem ersten Paar von Knoten bilden, wobei der spezifische Pfad ein drittes vorbestimmtes Kriterium bezüglich der anderen möglichen Pfade zwischen dem ersten Paar von Knoten erfüllt, und das dritte Kriterium zur Bestimmung eines Pfades mit den Gewichten der Kanten entlang eines Pfades zusammenhängt,
eine Einrichtung zur Aktualisierung der Gewichte, welche den Kanten zugeordnet sind, die den spezifischen Pfad bilden, für jede Kante des Pfades in jedem Knoten entlang des Pfades, wobei
- das Gewicht für Übertragung auf eine spezifische Kante, welches einer Kante zugeordnet ist, die in dem Pfad durch den Knoten auf die spezifische Kante übertragen wird, bezüglich des Anfangsgewichtes der Übertragung verringert wird,
- das Gewicht für Übertragung, welches einer Kante zugeordnet ist, die in dem Pfad an dem Knoten abgeschlossen wird, bezüglich des Anfangsgewichtes für die Übertragung erhöht wird,
- das Gewicht für Abschluss, welches einer Kante zugeordnet ist, die in dem Pfad durch den Knoten übertragen wird, bezüglich des Anfangsgewichtes für Abschluss erhöht wird, und
- das Gewicht für Abschluss, welches einer Kante zugeordnet ist, die in dem Pfad an dem Knoten abgeschlossen wird, bezüglich des Anfangsgewichtes für Abschluss verringert wird, und
eine Einrichtung zum Wählen eines weiteren Paares von Knoten, welches verschieden ist von dem ersten Paar, in Übereinstimmung mit dem ersten Kriterium, und Wiederholen des Prozesses der Bestimmung eines Pfades, Aktualisierung der Gewichte und Wählen eines weiteren Paares von Knoten, bis ein viertes vorbestimmtes Kriterium erfüllt ist.

## Revendications

1. Procédé pour configurer ou reconfigurer un réseau consistant en des noeuds (1, 3, 5, 7) et des liaisons (2, 4, 6), où au moins certaines des liaisons comprennent plusieurs sous-liaisons indépendantes (2a, 2b, 4a, 4b, 6a, 6b), lesdites sous-liaisons indépendantes étant discernables par une caractéristique prédéterminée et étant capables de transporter un signal indépendamment des autres sous-liaisons de ladite liaison, dans lequel lesdits noeuds connectés auxdites liaisons comprenant plusieurs sous-liaisons indépendantes peuvent au moins être définis de sorte que chaque sous-liaison indépendante se termine au niveau dudit noeud ou soit transmise vers une autre sous-liaison indépendante, ledit procédé comprenant :
la définition d'un graphe dans lequel les côtés représentent les sous-liaisons, les côtés parallèles représentent les liaisons qui comprennent lesdites sous-liaisons et les sommets et les côtés représentent les noeuds,
l'attribution de coefficients de pondération initiaux à chaque côté au niveau de chaque noeud, respectivement, pour la transmission et la terminaison, conformément à un premier critère prédéterminé,
le choix d'une première paire de noeuds conformément à un deuxième critère prédéterminé,
la détermination dune série desdites sous-liaisons indépendantes formant un trajet spécifique entre lesdits deux premiers noeuds, dans lequel ledit trajet spécifique satisfait à un troisième critère prédéterminé par rapport aux autres trajets possibles entre lesdits deux premiers noeuds, ledit troisième critère pour déterminer un trajet étant associé aux coefficients de pondération des côtés le long d'un trajet,
la mise à jour des coefficients de pondération attribués aux côtés formant ledit trajet spécifique, pour chaque côté dudit trajet dans chaque noeud le long dudit trajet, dans lequel :
- le coefficient de pondération pour la transmission vers un côté spécifique attribué à un côté qui, dans ledit trajet, est transmis à travers ledit noeud vers ledit côté spécifique est diminué par rapport au coefficient de pondération initial pour la transmission,
- le coefficient de pondération pour la transmission attribué à un côté qui, dans ledit trajet, se termine au niveau dudit noeud est augmenté par rapport au coefficient de pondération initial pour la transmission,
- le coefficient de pondération pour la terminaison attribué à un côté qui, dans ledit trajet, est transmis à travers ledit noeud est augmenté par rapport au coefficient de pondération initial pour la terminaison, et
- le coefficient de pondération pour la terminaison attribué à un côté qui, dans ledit trajet, se termine au niveau dudit noeud est diminué par rapport au coefficient de pondération initial pour la terminaison, et
le choix dune autre paire de noeuds qui est différente de ladite première paire, conformément audit premier critère, et la répétition dudit traitement de détermination d'un trajet, de mise à jour des coefficients de pondération et de choix d'une autre paire de noeuds jusqu'à ce qu'un quatrième critère prédéterminé soit satisfait.

2. Procédé selon la revendication 1, dans lequel ledit réseau est un réseau optique.

3. Procédé selon la revendication 2, dans lequel ledit réseau est un réseau à multiplexage par répartition spatiale et ladite caractéristique prédéterminée est l'emplacement spatial.

4. Procédé selon la revendication 2, dans lequel ledit réseau est un réseau à multiplexage par répartition en longueur d'onde et ladite caractéristique prédéterminée est la longueur d'onde.

5. Procédé selon la revendication 1, dans lequel conformément audit premier critère, le coefficient de pondération initial pour la transmission vers un côté correspondant à une sous-liaison de la même caractéristique est inférieur au coefficient de pondération initial pour la terminaison, et le coefficient de pondération initial pour la transmission vers un côté correspondant à une sous-liaison de la même caractéristique est également inférieur au coefficient de pondération initial pour la transmission vers un côté correspondant à une sous-liaison d'une caractéristique différente.

6. Procédé selon la revendication 5, dans lequel ledit coefficient de pondération initial pour la terminaison et ledit coefficient de pondération initial pour la transmission vers un côté correspondant à une sous-liaison dune caractéristique différente sont identiques.

7. Procédé selon la revendication 1, dans lequel, conformément audit deuxième critère, ledit choix des paires de noeuds est effectué en fonction de la demande de trafic moyen entre les noeuds, de sorte que la paire de noeuds ayant la demande de trafic la plus grande soit choisie en premier et qu'ensuite les paires supplémentaires soient choisies dans l'ordre de la demande de trafic décroissante.

8. Procédé selon la revendication 1, dans lequel, conformément audit deuxième critère, ledit choix des paires de noeuds est effectué de manière aléatoire.

9. Procédé selon la revendication 1, dans lequel, conformément audit deuxième critère, ledit choix des paires de noeuds est effectué en fonction de la distance entre les noeuds, de sorte que la paire de noeuds ayant la distance la plus courte soit choisie en premier et qu'ensuite les paires supplémentaires soient choisies dans l'ordre des distances croissantes, ladite distance étant Tune de la distance physique et du nombre de sauts entre les noeuds

10. Procédé selon la revendication 1, dans lequel, conformément audit deuxième critère, ledit choix des paires de noeuds est effectué en fonction de la demande de trafic et de la distance entre les noeuds, ladite distance étant Tune de la distance physique et du nombre de sauts entre les noeuds

11. Procédé selon la revendication 1, dans lequel, conformément audit troisième critère, ledit trajet spécifique est sélectionné parmi tous les trajets possibles entre lesdits noeuds en tant que trajet ayant le coefficient de pondération résultant le plus faible.

12. Procédé selon la revendication 1, dans lequel, pendant l'étape de mise à jour desdits coefficients de pondération :
- le coefficient de pondération pour la transmission vers un côté spécifique attribué à un côté qui, dans ledit trajet, est transmis à travers ledit noeud vers ledit côté spécifique est fixé à zéro,
- le coefficient de pondération pour la transmission attribué à un côté qui, dans ledit trajet, se termine au niveau dudit noeud est augmenté à l'équivalent numériquement possible de l'infini,
- le coefficient de pondération pour la terminaison attribué à un côté qui, dans ledit trajet, est transmis à travers ledit noeud est augmenté à l'équivalent numériquement possible de l'infini, et
- le coefficient de pondération pour la terminaison attribué à un côté qui, dans ledit trajet, se termine au niveau dudit noeud est diminué à une valeur comprise entre le coefficient de pondération initial pour la terminaison et zéro.

13. Procédé selon la revendication 1, dans lequel, conformément audit quatrième critère, ledit traitement est répété jusqu'à ce que chaque paire de noeuds possible ait été prise en compte.

14. Procédé selon la revendication 1, dans lequel, conformément audit quatrième critère, ledit traitement est répété jusqu'à ce qu'un ensemble prédéterminé de paires de noeuds ait été pris en compte.

15. Procédé selon la revendication 1, dans lequel ladite étape de détermination d'une série de sous-liaisons indépendantes formant un trajet spécifique entre des noeuds donnés comprend l'étape de détermination seulement d'une série dans laquelle chaque sous-liaison a une capacité de transmission suffisamment grande pour gérer la demande de trafic entre lesdits noeuds donnés.

16. Dispositif pour configurer ou reconfigurer un réseau consistant en des noeuds (1, 3, 5, 7) et des liaisons (2, 4, 6), où au moins certaines desdites liaisons comprennent plusieurs sous-liaisons indépendantes (2a, 2b, 4a, 4b, 6a, 6b), lesdites sous-liaisons indépendantes étant discernables par une caractéristique prédéterminée et étant capables de transporter un signal indépendamment des autres sous-liaisons de ladite liaison, dans lequel lesdits noeuds connectés auxdites liaisons comprenant plusieurs sous-liaisons indépendantes peuvent être au moins définis de sorte que chaque sous-liaison indépendante se termine au niveau dudit noeud ou soit transmise vers une autre sous-liaison indépendante, ledit procédé comprenant :
des moyens pour définir un graphe dans lequel les côtés représentent les sous-liaisons, les côtés parallèles représentent les liaisons qui comprennent lesdites sous-liaisons et les sommets et les côtés représentent les noeuds,
des moyens pour attribuer des coefficients de pondération initiaux à chaque côté au niveau de chaque noeud, respectivement, pour la transmission et la terminaison, conformément à un premier critère prédéterminé,
des moyens pour choisir une première paire de noeuds conformément à un deuxième critère prédéterminé,
des moyens pour déterminer une série desdites sous-liaisons indépendantes formant un trajet spécifique entre lesdits deux premiers noeuds, dans lequel ledit trajet spécifique satisfait à un troisième critère prédéterminé par rapport aux autres trajets possibles entre lesdits deux premiers noeuds, ledit troisième critère pour déterminer un trajet étant associé aux coefficients de pondération des côtés le long d'un trajet,
des moyens pour mettre à jour les coefficients de pondération attribués aux côtés formant ledit trajet spécifique, pour chaque côté dudit trajet dans chaque noeud le long dudit trajet, dans lequel :
- le coefficient de pondération pour la transmission vers un côté spécifique attribué à un côté qui, dans ledit trajet, est transmis à travers ledit noeud vers ledit côté spécifique est diminué par rapport au coefficient de pondération initial pour la transmission,
- le coefficient de pondération pour la transmission attribué à un côté qui, dans ledit trajet, se termine au niveau dudit noeud est augmenté par rapport au coefficient de pondération initial pour la transmission,
- le coefficient de pondération pour la terminaison attribué à un côté qui, dans ledit trajet, est transmis à travers ledit noeud est augmenté par rapport au coefficient de pondération initial pour la terminaison, et
- le coefficient de pondération pour la terminaison attribué à un côté qui, dans ledit trajet, se termine au niveau dudit noeud est diminué par rapport au coefficient de pondération initial pour la terminaison, et
des moyens pour choisir une autre paire de noeuds qui est différente de ladite première paire, conformément audit premier critère et pour répéter ledit traitement de détermination d'un trajet, de mise à jour des coefficients de pondération et de choix dune autre paire de noeuds jusqu'à ce qu'un quatrième critère prédéterminé soit satisfait.
